# EUROPEAN PATENT APPLICATION

(11) **EP 3 358 803 A1**
(43) Date of publication of application: **08.08.2018**
(21) Application number: 18153980.0
(22) Date of filing: 29.01.2018
(51) Int. Cl.: H04L 29/06, H04L 12/40

(54) **SYSTEMS AND METHODS FOR TRANSMITTING MESSAGES IN A CONTROLLER AREA NETWORK**

(30) Priority: 07.02.2017 US 201715426144
(71) Applicant: NXP USA, Inc., Austin TX 78735 (US)
(72) Inventor: Brochi, Antonio Mauricio, Redhill, Surrey RH1 1QZ (GB); Domingues, Patricia Elaine, Redhill, Surrey RH1 1QZ (GB); Marinho, Marcelo, Redhill, Surrey RH1 1QZ (GB); Soja, Richard, Redhill, Surrey RH1 1QZ (GB); Refaeli, Jehoda, Redhill, Surrey RH1 1QZ (GB)
(74) Representative: Miles, John Richard

(57) **Abstract**

An integrated circuit includes Controller Area Network (CAN) circuitry, and identifier (ID) filter circuitry coupled to the CAN circuitry and a CAN bus. The ID filter circuitry is configured to determine if a CAN message selected for transmission by the CAN circuitry should be blocked based on an ID of the selected CAN message. In response to determining that the selected message should not be blocked, the CAN circuitry broadcasts the selected message to all CAN nodes coupled to the CAN bus. In response to determining that the selected message should be blocked, the selected message is not transmitted to the CAN bus.

## Description

### Background

### Field

This disclosure relates generally to transmitting messages in controller area networks, and more specifically, to authenticating an identifier in messages transmitted in a controller area network.

### Related Art

The International Standardization Organization (ISO) controller area network (CAN) bus is a multi-master message broadcast system that broadcasts short messages containing a limited amount of data, such as temperature or RPM, to all nodes on the CAN bus and is commonly used in various devices, such as, for example, automobiles, trucks, motorcycles, snowmobiles trains, buses, airplanes, agriculture, construction, mining, industrial equipment, and marine vehicles. The broadcast provides for data being sent to more than one location and for consistency in every node of the network. In contrast, a traditional network such as USB or Ethernet sends large blocks of data point-to-point from node A to node B under the supervision of a central bus master.

In current CAN implementations, messages include a message identifier that specifies a type of message, message priority, destination, type of information, etc. The CAN bus protocol places no restriction on message identifier numbers in transmitted messages, so all identifiers defined by application software are transmitted. As a consequence, conflict with messages with the same message identifier on the CAN bus during the arbitration phase can "destroy" a message from other nodes, and conflict with the information of the "correct" messages on receiver nodes. If the receiving node is a gateway, the message with a "wrong" message identifier will propagate through other CAN buses or eventually other interfaces. In addition, a message with a "wrong" message identifier may be transmitted by a malicious code with the intention of disturbing the correct operation of a microcontroller unit and potentially an entire system. Critical automotive systems, such as breaking control, airbag, throttle control, and power steering control, may be potential targets of these attacks. Therefore the lack of a protection/checking of the transmitted message identifiers can be a drawback in the operation of CAN networks, especially those controlling critical electronic systems.

### Summary

Various aspects of the disclosure are defined in the accompanying claims.

In a first aspect there is provided an integrated circuit comprising: Controller Area Network circuitry; and identifier (ID) filter circuitry coupled to the CAN circuitry and a CAN bus, wherein the ID filter circuitry is configured to determine if a CAN message selected for transmission by the CAN circuitry should be blocked based on an ID of the selected CAN message, wherein, in response to determining that the selected message should not be blocked, the CAN circuitry broadcasting the selected message to all CAN nodes coupled to the CAN bus and in response to determining that the selected message should be blocked, not transmitting the selected message to the CAN bus.

In a second aspect there is provided in a CAN node coupled to a CAN bus and having an identifier (ID) table, a method comprising: storing a CAN message for transmission; determining, using the ID table, if an ID of the CAN message indicates the CAN message should by blocked, wherein the ID table indicates one or more message IDs that should be blocked; if it is determined that the CAN message should not be blocked, broadcasting the CAN message to other CAN nodes coupled to the CAN bus; and if it is determined that the CAN message should be blocked, not transmitting the CAN message to the CAN bus.

### Brief Description of the Drawings

The present disclosure is illustrated by way of example and is not limited by the accompanying figures, in which like references indicate similar elements. Elements in the figures are illustrated for simplicity and clarity and have not necessarily been drawn to scale.
FIG. 1 illustrates a block diagram of a system that includes a controlled area network (CAN) in accordance with selected embodiments of the invention.
FIG. 2 illustrates a diagram of components used in an embodiment of a process for handling CAN messages in the system of FIG. 1.
FIG. 3 illustrates an embodiment of ID filter circuitry that can be used in the system of FIG. 1.
FIGs. 4-6 illustrate examples of ID filter tables that can be used in the system of FIG. 1.
FIG. 7 illustrates a flow diagram of an embodiment of a method for validating identifiers of CAN messages in the system of FIG. 1.

### Detailed Description

In embodiments disclosed herein, an identifier of a message transmitted to a controlled area network (CAN) is authenticated before the message is broadcast on the CAN bus. If the identifier matches any of the entries in an identifier filter table, the message is blocked and a warning message may be sent to a host processor to take corrective or protective measures. In addition, a message to warn the other nodes that a message was blocked may be sent. The nodes in the CAN are thus prevented from transmitting non-authenticated messages, thereby restricting unauthorized access to the CAN.

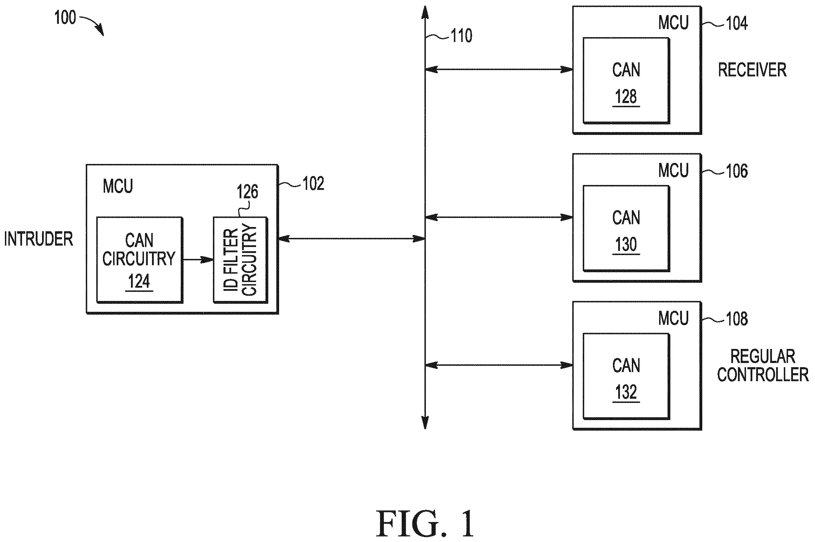

FIG. 1 illustrates a block diagram of a system 100 that includes a controlled area network (CAN) in accordance with selected embodiments of the invention. System 100 includes several microcontroller units (MCUs) 102, 104, 106, 108 coupled to communicate with one another via CAN bus 110. MCUs 102, 104, 106, 108 include respective CAN circuitry 124, 128, 130, 132 that can include components necessary to implement communication using the CAN communication protocol such as a controller, a transceiver and a bus line to connect with CAN bus 110. The CAN communication protocol used in system 100 can be compliant with a suitable International Standards Organization (ISO) CAN standard, such as ISO-11898, including the standard and the extended CAN protocols. Messages used in the standard CAN protocol include an 11 bit identifier while messages used in the extended CAN protocol include a 29 bit identifier. While a portion of the identifier can be used to indicate the priority of the message, another portion of the identifier can be used to indicate the type of message. There can be many different types of messages, such as, for example, various sensor data from an engine, transmission, environmental control, airbags, antilock braking, cruise control, power steering, audio and infotainment systems, power windows, doors, mirror and seat adjustment, and battery and recharging systems. Each type of data can be identified with a unique value in the identifier field of a message. A piece of equipment such as an automobile can include multiple CAN networks. Each of the CAN networks can include a gateway node that is connected to communicate with one or more of the other CAN networks. Data that is exchanged between CAN networks is generally predefined and predictable during normal operation. The present system 100 provides a way to prevent messages that are not expected at the gateway node from being transmitted to other nodes in a CAN network. The odds of malicious or even unintentional intrusions into one or more CAN network that could otherwise disrupt operation of the equipment in which the CAN network is installed are reduced.

MCUs 102, 104, 106, 108 can perform different functions, and/or may provide redundant fail-safe backup for one another by taking over the functionality of a failed MCU. For example, in an automobile, MCU 102 may be an onboard diagnostic chip, an infotainment system, or any other type of chip that serves as a network gateway to communicate with external devices and networks. MCU 104 may be an engine control unit. MCU 106 may be an airbag controller, and MCU 108 may be used for climate control. Additional (or fewer) MCUs can be included in system 100 and may perform different functions in addition to or instead of those listed for MCUs 102-108.

In the embodiment shown, MCU 102 includes identifier filter circuitry 126, however any MCUs 104, 106, 108 capable of receiving messages from devices external to system 100 can also include respective identifier filter circuitry 126. Identifier (ID) filter circuitry 126 includes a searchable table or list of identifiers that indicate the types of messages that are authorized to be communicated to one or more of MCUs 104-108 via CAN bus 110. Each message that is received by MCU 102 includes an identifier. ID filter circuitry 126 determines whether the identifier in the message matches an entry in a list of identifiers in ID filter circuitry 126. In some implementations, the list in ID filter circuitry 126 includes unauthorized identifiers. In this case, if the identifier matches an entry in the list, the message is prohibited from being transmitted to any of MCUs 104-108 via CAN bus 110. Additionally, a warning message can be sent to MCUs 104-108 for corrective or protective action. Further, MCU 102 can notify one or more devices external to system 100 of the attempt by an unauthorized type of message being sent to system 100. Otherwise, if the identifier does not match any of the entries in the list, the message is transmitted on CAN bus 110. In other implementations, the list can include authorized identifiers, in which case when the identifier in the message matches an entry in the list ID filter circuitry 126, the message is transmitted onto the CAN bus 110. Otherwise, the message is prohibited from being transmitted and a notice can be sent by the MCU 102 that received the unauthorized message to warn of a potentially unauthorized attempt to intrude into system 100.

A gateway node, such as MCU 102 in the example of FIG. 1, can be expected to transmit messages with certain types of identifiers to MCUs 104-108 via CAN bus 110. Messages with identifiers that do not match the expected identifiers can be considered suspect. The list of identifiers in ID filter circuitry 126 can be programmed by a user implementing system 100 to indicate the types of messages allowed to be transmitted onto CAN bus 110 based, for example, on a particular application or use. Messages with unexpected identifier types sent intentionally or unintentionally either to overwrite code, override functionality in MCUs 104-108, or by mistake, will not be further transmitted in system 100, thereby preventing potential malfunctions of system 100. One particular area of vulnerability can be externally accessible communication ports, such as a USB port on an infotainment system that allows users to interface devices such as thumb drives that may contain malware intended to affect the operation of onboard systems. For example, the malware may be intended to render systems such as airbag, engine, or braking controllers inoperable. Preventing unexpected types of messages from being transmitted on CAN bus 110 can help prevent unauthorized intrusions and improve the reliability of system 100.

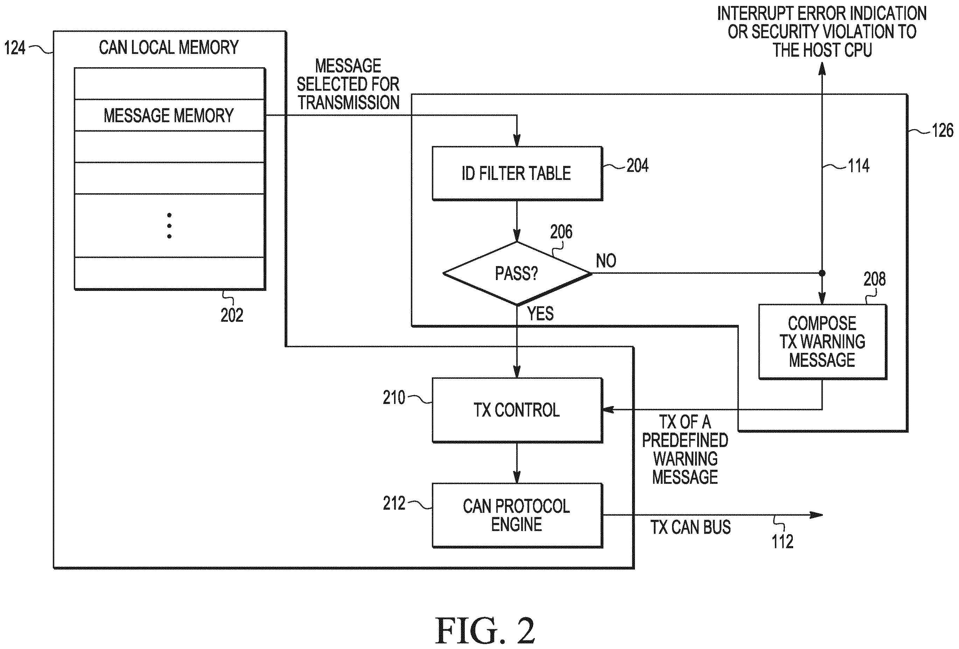

Referring to FIGs. 1 and 2, FIG. 2 illustrates a diagram of components used in an embodiment of a process for handling CAN messages in system 100 of FIG. 1. CAN circuitry 124 includes CAN local memory 202, transmit control circuitry 210, and CAN protocol engine circuitry 212. ID filter circuitry 126 includes ID filter table 203, pass circuitry 206, and warning message circuitry 208.

Messages received by MCU 102 can be stored in CAN local memory 202. CAN local memory 202 can include multiple entries for storing or buffering messages to be authenticated by ID filter circuitry 126. Messages may be selected for authentication based on order received or by a priority value associated with or contained in the messages. Each message includes an identifier field that specifies a type of message. For example, a message that includes wheel speed data for an automobile will be given a value indicating one message type while the identifiers in messages that include other data will have other values. If the identifier of a selected message indicates a type of message that is allowed to be transmitted to the rest of system 100, pass circuitry 206 sends the selected message to transmit control circuitry 210. Once ready for transmission, transmit control circuitry 210 sends the selected message to CAN protocol engine 212 to transmit the selected message on CAN bus 110 according to the CAN protocol.

If the identifier of a selected message indicates a type of message that is not allowed to be transmitted to the rest of system 100, pass circuitry 206 can send an indication that an unauthorized message was received by MCU 102 but not transmitted to the rest of system 100. Warning message circuitry 208 can send a warning indicator or message to transmit control circuitry 210. Once ready for transmission, transmit control circuitry 210 sends the warning message to CAN protocol engine 212 to transmit the warning message on CAN bus 110 according to the CAN protocol. Additionally, pass circuitry can send an indication that an unauthorized message was received by MCU 102 but not transmitted to the rest of system 100 to an external host processor or other device. At this point, corrective or protective action may be taken by the external device to thwart an unauthorized intrusion.

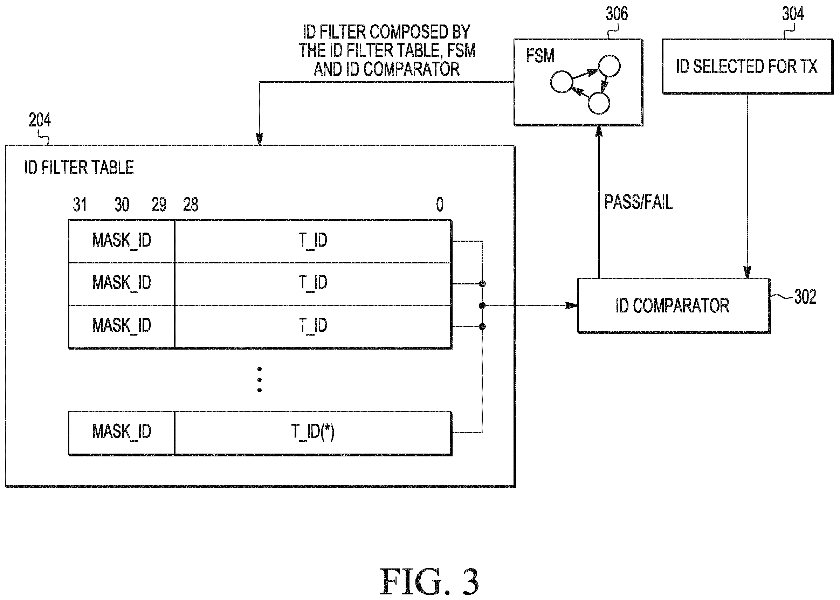

Referring to FIGs. 2 and 3, FIG. 3 illustrates an embodiment of ID filter circuitry 126 that can be used in system 100 of FIG. 1. ID filter table 204 includes multiple entries, with each entry including a mask or identifier (Mask/ID) and a type identifier (T_ID). In the example shown, each entry includes 32 bits, with bits [31:29] reserved for the mask/identifier and bits [28:0] reserved for the type identifier. Note that any other suitable number and arrangement of bits can be used for the entries in ID filter table 204, however. Each entry corresponds to a message type that is authorized to be transmitted on CAN bus 110 in system 100. Note that in other implementations, each entry can correspond to a message type that in not authorized to be transmitted on CAN but 110. In addition, the type identifier can be combined with other information such as message priority or other suitable information.

ID filter table 204 is coupled to ID comparator 302, which compares the identifier of a selected message 304 from CAN local memory 202 to each of the identifiers in the entries of ID filter table 204. If the entries of ID filter table 204 indicate types of authorized messages, the selected message will be transmitted on CAN bus 110 if there is a match between the identifier of the selected message 304 and an entry in ID filter table 204. If the entries of ID filter table 204 indicate types of unauthorized messages, the selected message will not be transmitted on CAN bus 110 if there is a match between the identifier of the selected message 304 and an entry in ID filter table 204. The result of each comparison is provided to a finite state machine 306 or other suitable logic circuitry to increment the entry of ID filter table 204 being compared against the identifier of selected message 304. Once it is determined that a message is not authorized, pass circuitry 206 can send an indicator to warning message circuitry 208 to send a warning message to components in system 100 and, optionally, to components external to system 100. If all the entries of ID filter table 204 are compared to the identifier of the selected message, and the identifier includes a type that is allowed to be transmitted in system 100, pass circuitry 206 sends an indicator that the message is authorized for further transmission in system 100 to transmit control 210.

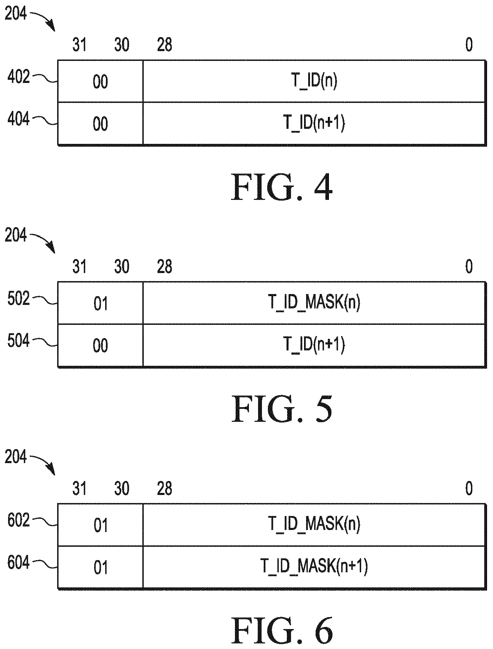

The mask/identifier field of each entry in ID filter table 204 can be used to indicate a single type or a range of types. For example, if the mask is all zeroes, the type identifier field may be a single value. If an entry has a mask with a prespecified pattern, such as '01', the mask can indicate a range of values is used for the type identifier. FIGs. 4-6 illustrate examples of mask values in ID filter table 204 that can be used in the system of FIG. 1. In FIG. 4, entries 402 and 404 each have mask value of '00' indicating each type identifier is a standalone value that can be used for comparison with a selected message. In FIG. 5, entry 502 has a mask value of '01' and entry 504 has a mask value of '00'. For entry 502, the identifier of the selected message is masked with the mask value of '01' and compared to the identifier in entry 502. Depending on the implementation, if there is a match (or not), the selected message is authorized for further transmission (or not). In FIG. 6, entries 602 and 604 each have a mask value of '01', in which case the identifier of the selected message will be masked when compared to both entries 602, 604, allowing for a range of type identifiers to be specified by each entry 602, 604.

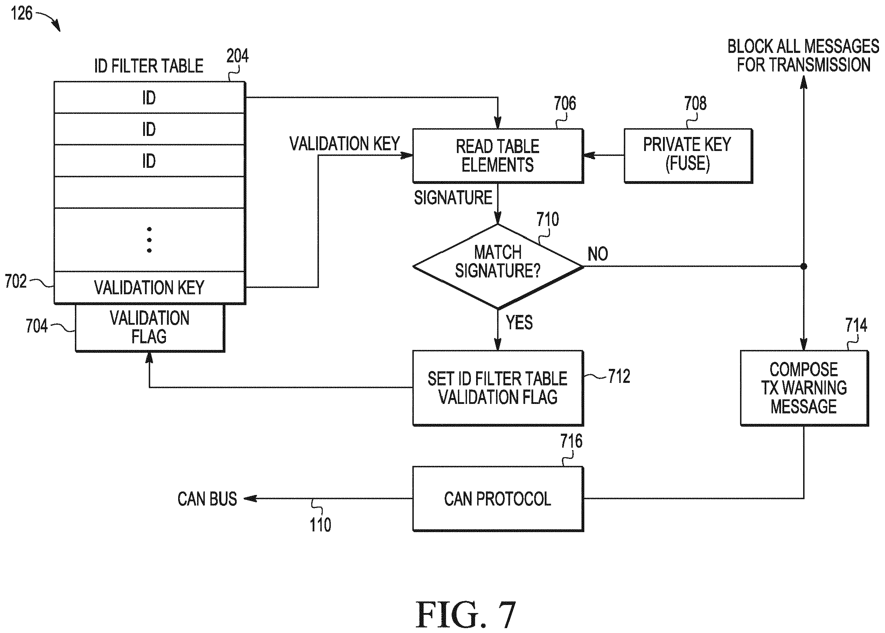

FIG. 7 illustrates a flow diagram of an embodiment of a method 700 for validating identifiers of CAN messages in system 100 of FIG. 1. A validation key 702 and validation flag 704 are included or appended to ID filter table 204. Validation key 702 can be secure value provided by a programmer or user when system 100 is being implemented. The value or contents of validation key 702 can be protected so only an authorized user or administrator can change or update the value. Further, the entire contents of ID filter table 204 may be protected from unauthorized access using encryption and/or other security features. Validation flag 704 can be set by logic such as process 712 in method 700 to indicate whether the contents of ID filter table 204 have the expected values or signature.

In process 706, validation key 702, type identifiers from ID filter table 204, and private key 708 are used to create a current signature value. Private key 708 can be hard coded, for example, coded using one or more non-volatile memory elements such as fuses. If the current signature value matches an initial signature value that was generated when ID filter table 204 was initially created, process 710 transitions to process 712 to set validation flag 704 to indicate the contents of ID filter table 204 are valid. If the current signature does not match the initial signature in process 710, an indicator can be sent to generate a warning message in process 714. The warning message can be sent to components in system 100 via CAN bus 110 using the CAN protocol in process 716, and, optionally, to components external to system 100 to indicate the contents of ID filter table 204 are not valid and cannot be used to test whether the types of messages received by a gateway node in system 100 can be transmitted to other components in system 100.

As used herein, the term "bus" is used to refer to a plurality of signals or conductors which may be used to transfer one or more various types of information, such as data, addresses, control, or status. The conductors as discussed herein may be illustrated or described in reference to being a single conductor, a plurality of conductors, unidirectional conductors, or bidirectional conductors. However, different embodiments may vary the implementation of the conductors. For example, separate unidirectional conductors may be used rather than bidirectional conductors and vice versa. Also, plurality of conductors may be replaced with a single conductor that transfers multiple signals serially or in a time multiplexed manner. Likewise, single conductors carrying multiple signals may be separated out into various different conductors carrying subsets of these signals. Therefore, many options exist for transferring signals.

By now it should be appreciated that, in some embodiments, there has been provided an integrated circuit (IC) that can comprise Controller Area Network (CAN) circuitry (124), and identifier (ID) filter circuitry (126) coupled to the CAN circuitry and a CAN bus (110). The ID filter circuitry can be configured to determine if a CAN message selected for transmission by the CAN circuitry should be blocked based on an ID of the selected CAN message, wherein, in response to determining that the selected message should not be blocked, the CAN circuitry broadcasts the selected message to all CAN nodes coupled to the CAN bus and in response to determining that the selected message should be blocked, not transmitting the selected message to the CAN bus.

In another aspect, the ID filter circuitry can comprise an ID table (204) wherein the ID filter circuitry is configured to use the ID table to determine if the CAN message selected for transmission by the CAN circuitry should be blocked. (Note that this can be done by listing blocked IDs or allowed IDs, for example).

In another aspect, the ID table can comprise a plurality of entries, wherein each entry is configured to store ID information indicating one or more message IDs that should be blocked (whether mask or exact IDs, for example).

In another aspect, the identifier filter circuitry can comprise comparison circuitry (e.g. 306 and 302) which compares the ID of the selected message to each entry of the ID table to determine if the CAN message selected for transmission should be blocked.

In another aspect, each entry of the ID table can be configured to store a mode field (e.g. 402, 404, 502, 504, 602, 604) and an ID field (406, 408, 506, 508, 606, 608), wherein when the mode field has a first value, the ID field stores a blocked message ID and when the mode field has a second value, the ID field stores information indicating a range of blocked message IDs (e.g., mask).

In another aspect, when the mode field has the second value, the ID field of one or more entries of the ID table stores a mask (mask can be in entry N or in N and N+1, for example).

In another aspect, the ID filter circuitry can be further configured to, in response to determining that the selected message should be blocked, the CAN circuitry broadcasting a warning message to all CAN nodes coupled to the CAN bus.

In another aspect, the ID table can be further configured to store a validation key (702) generated using the stored ID information of the ID table and a private key (708).

In another aspect, the IC can further comprise non-volatile memory configured to store the private key.

In another aspect, the ID filter circuitry can be further configured to use the validation key and private key to determine a signature (706), wherein the ID filter circuitry if further configured to, if the signature matches an expected signature, assert a validation flag (704) to validate the ID table.

In other embodiments, in a CAN node (102 or 124) coupled to a CAN bus and having an identifier (ID) table, a method can comprise storing a CAN message for transmission, and determining, using the ID table (204), if an ID of the CAN message indicates the CAN message should by blocked. The ID table indicates one or more message IDs that should be blocked. If it is determined that the CAN message should not be blocked, the CAN message is broadcast to other CAN nodes coupled to the CAN bus. If it is determined that the CAN message should be blocked, not transmitting the CAN message to the CAN bus.

In another aspect, if it is determined that the CAN message should be blocked, the method can further comprise broadcasting a warning message to the other CAN nodes coupled to the CAN bus.

In another aspect, the method can further comprise storing the ID table in the CAN node; and generating and storing a validation key using the ID table and a private key.

In another aspect, the method can further comprise using the validation key and private key to determine a signature.

In another aspect, if the signature matches an expected signature, asserting a validation flag to validate the ID table, wherein using the ID table to determine if an ID of the CAN message indicates the CAN message should be blocked is performed after assertion of the validation flag.

In another aspect, if the signature does not match the expected signature, the method further comprises broadcasting a warning message to the other CAN nodes coupled to the CAN bus and not broadcasting any subsequent CAN message to the CAN bus. (714)

In still further embodiments, an integrated circuit (IC) can comprise Controller Area Network (CAN) circuitry of a first CAN node; and identifier (ID) filter circuitry of the first CAN node coupled to the CAN circuitry and a CAN bus and having an ID table. The ID table includes a plurality of entries, and each entry is configured to store ID information indicating one or more message IDs that should be blocked. The ID filter circuitry is configured to use the ID table to determine if a CAN message selected for transmission by the CAN circuitry should be blocked based on an ID of the selected CAN message. In response to determining that the selected message should not be blocked, the CAN circuitry broadcasts the selected message to all CAN nodes coupled to the CAN bus and in response to determining that the selected message should be blocked, the selected message is not transmitted to the CAN bus.

In another aspect, the ID table can comprise a plurality of entries, wherein each entry is configured to store ID information indicating one or more message IDs that should be blocked and the ID filter circuitry comprises comparison circuitry which compares the ID of the selected message to each entry of the ID table to determine if the CAN message selected for transmission should be blocked.

In another aspect, the ID filter circuitry can be further configured to, in response to determining that the selected message should be blocked, the CAN circuitry broadcasting a warning message to all CAN nodes coupled to the CAN bus.

In another aspect, the ID table can be further configured to store a validation key generated using entries of the ID table and a private key stored in non-volatile memory.

An integrated circuit includes Controller Area Network (CAN) circuitry, and identifier (ID) filter circuitry coupled to the CAN circuitry and a CAN bus. The ID filter circuitry is configured to determine if a CAN message selected for transmission by the CAN circuitry should be blocked based on an ID of the selected CAN message. In response to determining that the selected message should not be blocked, the CAN circuitry broadcasts the selected message to all CAN nodes coupled to the CAN bus. In response to determining that the selected message should be blocked, the selected message is not transmitted to the CAN bus.

Because the apparatus implementing the present disclosure is, for the most part, composed of electronic components and circuits known to those skilled in the art, circuit details will not be explained in any greater extent than that considered necessary as illustrated above, for the understanding and appreciation of the underlying concepts of the present disclosure and in order not to obfuscate or distract from the teachings of the present disclosure.

Some of the above embodiments, as applicable, may be implemented using a variety of different information processing systems. For example, although Figure 1 and the discussion thereof describe an exemplary information processing architecture, this exemplary architecture is presented merely to provide a useful reference in discussing various aspects of the disclosure. Of course, the description of the architecture has been simplified for purposes of discussion, and it is just one of many different types of appropriate architectures that may be used in accordance with the disclosure. Those skilled in the art will recognize that the boundaries between logic blocks are merely illustrative and that alternative embodiments may merge logic blocks or circuit elements or impose an alternate decomposition of functionality upon various logic blocks or circuit elements.

Thus, it is to be understood that the architectures depicted herein are merely exemplary, and that in fact many other architectures can be implemented which achieve the same functionality. In an abstract, but still definite sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

Furthermore, those skilled in the art will recognize that boundaries between the functionality of the above described operations merely illustrative. The functionality of multiple operations may be combined into a single operation, and/or the functionality of a single operation may be distributed in additional operations. Moreover, alternative embodiments may include multiple instances of a particular operation, and the order of operations may be altered in various other embodiments.

Although the disclosure is described herein with reference to specific embodiments, various modifications and changes can be made without departing from the scope of the present disclosure as set forth in the claims below. For example, the embodiments disclosed herein can be adapted for use in a variety of applications, including but not limited to, trucks, motorcycles, snowmobiles trains, buses, airplanes, agriculture, construction, mining, industrial equipment, and marine vehicles. Accordingly, the specification and figures are to be regarded in an illustrative rather than a restrictive sense, and all such modifications are intended to be included within the scope of the present disclosure. Any benefits, advantages, or solutions to problems that are described herein with regard to specific embodiments are not intended to be construed as a critical, required, or essential feature or element of any or all the claims.

The term "coupled," as used herein, is not intended to be limited to a direct coupling or a mechanical coupling.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to disclosures containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

## Claims

1. An integrated circuit (IC), comprising:
Controller Area Network (CAN) circuitry; and
identifier (ID) filter circuitry coupled to the CAN circuitry and a CAN bus, wherein the ID filter circuitry is configured to determine if a CAN message selected for transmission by the CAN circuitry should be blocked based on an ID of the selected CAN message, wherein, in response to determining that the selected message should not be blocked, the CAN circuitry broadcasting the selected message to all CAN nodes coupled to the CAN bus and in response to determining that the selected message should be blocked, not transmitting the selected message to the CAN bus.

2. The IC of claim 1, wherein the ID filter circuitry comprises an ID table wherein the ID filter circuitry is configured to use the ID table to determine if the CAN message selected for transmission by the CAN circuitry should be blocked.

3. The IC of claim 2, wherein the ID table comprises a plurality of entries, wherein each entry is configured to store ID information indicating one or more message IDs that should be blocked and the message IDs indicate a type of information in the CAN message.

4. The IC of claim 2 or 3, wherein the identifier filter circuitry comprises comparison circuitry which compares the ID of the selected message to each entry of the ID table to determine if the CAN message selected for transmission should be blocked.

5. The IC of any of claims 2 to 4, wherein each entry of the ID table is configured to store a mode field and an ID field, wherein when the mode field has a first value, the ID field stores a blocked message ID and when the mode field has a second value, the ID field stores information indicating a range of blocked message IDs.

6. The ID of claim 5, wherein when the mode field has the second value, the ID field of one or more entries of the ID table stores a mask.

7. The IC of any of claims 2 to 6 wherein the ID table is further configured to store a validation key generated using the stored ID information of the ID table and a private key.

8. The IC of claim 7, further comprising non-volatile memory configured to store the private key.

9. The IC of claim 7 or 8, wherein the ID filter circuitry is further configured to use the validation key and private key to determine a signature, wherein the ID filter circuitry if further configured to, if the signature matches an expected signature, assert a validation flag to validate the ID table.

10. The IC of any preceding claim, wherein the ID filter circuitry is further configured to, in response to determining that the selected message should be blocked, the CAN circuitry broadcasting a warning message to all CAN nodes coupled to the CAN bus.

11. In a CAN node coupled to a CAN bus and having an identifier (ID) table, a method comprising:
storing a CAN message for transmission;
determining, using the ID table, if an ID of the CAN message indicates the CAN message should by blocked, wherein the ID table indicates one or more message IDs that should be blocked;
if it is determined that the CAN message should not be blocked, broadcasting the CAN message to other CAN nodes coupled to the CAN bus; and
if it is determined that the CAN message should be blocked, not transmitting the CAN message to the CAN bus.

12. The method of claim 11, wherein if it is determined that the CAN message should be blocked, the method further comprises:
broadcasting a warning message to the other CAN nodes coupled to the CAN bus.

13. The method of claim 11 or 12 further comprising:
storing the ID table in the CAN node; and
generating and storing a validation key using the ID table and a private key.

14. The method of claim 13, further comprising using the validation key and private key to determine a signature.

15. The method of claim 14, wherein if the signature matches an expected signature, asserting a validation flag to validate the ID table, wherein using the ID table to determine if an ID of the CAN message indicates the CAN message should be blocked is performed after assertion of the validation flag.
